# EUROPEAN PATENT APPLICATION

(11) **EP 1 056 301 A2**
(43) Date of publication of application: **29.11.2000**
(21) Application number: 00304367.6
(22) Date of filing: 24.05.2000
(51) Int. Cl.: H04Q 7/24, H04L 29/06

(54) **Packet handling in a mobile network**

(30) Priority: 24.05.1999 GB 9912035
(71) Applicant: NEC CORPORATION, Tokyo (JP)
(72) Inventor: McCarthy, Andrew, Leatherhead, Surrey KT22 7SA (GB)
(74) Representative: Moir, Michael Christopher

(57) **Abstract**

A method of handling data packets received from a packet network comprises the steps of receiving protocol data packets (PDP) from a network at a gateway and passing the protocol data packets to a switching center or service node connected to a radio network controller. The method further comprises the steps of forwarding the protocol data packets from the switching center to the radio network controller and terminating the protocol data packets within the radio network controller and forwarding data corresponding to the protocol data packet from the radio network controller to the user equipment.

## Description

### Background of the Invention

The present invention relates to the handling of data packets in a mobile communications network, particularly Internet Protocol (IP) or similar packets in a third generation mobile telephone system.

Background information containing proposals for the 3rd generation (UMTS) mobile telecommunications system may be found in any of a number of publications by the International Telecommunications Union (ITU), the European Telecommunications Standardisation Institution (ETSI) or the 3rd Generation Partnership Project (3GPP) and the proposals pending on 24 May 1999 are herein incorporated by reference. Also incorporated herein by reference by way of background are the agreed standards for 2nd generation mobile telecommunication systems as implemented on 24 May 1999. Those skilled in the art will be familiar with these proposals both from conventionally published articles and from the content of various internet sites discussing the subject, representative examples of which are to be found at www.etsi.org and www.3gpp.org, the contents of which, together with the content of related and linked sites, at least up to 24 May 1999, are herein incorporated by reference.

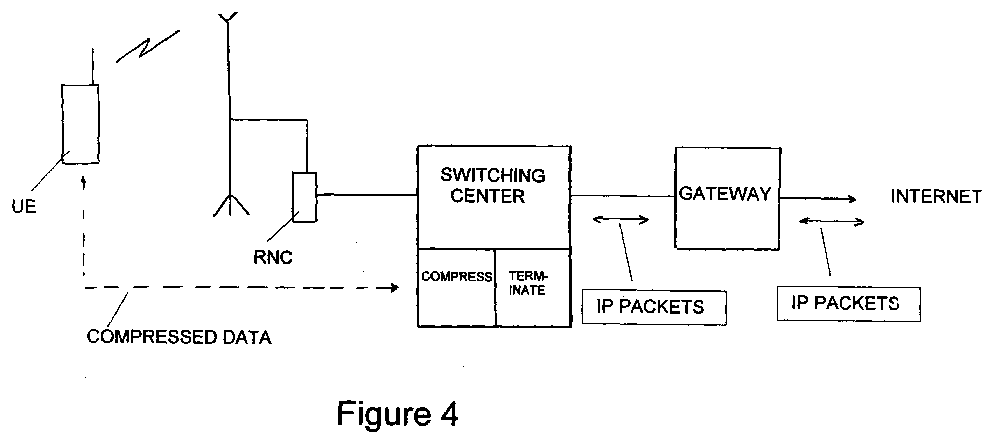

In a 2nd generation GSM system, there are certain functional blocks which serve to connect User Equipment (UE) such as a mobile telephone incorporating an electronic mail (e-mail) interface to a packet switched network (PSTN) such as the internet, as schematically depicted in Fig. 4. Essentially, the user equipment (UE) communicates with a network of radio stations with associated Radio Network Controllers (RNC) which are interconnected by means of one or more switching centres and the switching centre(s) is connected to a gateway to the packet switched network. Internet protocol (IP) packets received from the packet switched network pass through the gateway to the switching centre. At the switching centre, the packets are compressed and an acknowledgement returned to the packet switch network is required, and a compressed version of the packet is forwarded over a "reliable link" from the switching centre to the user equipment, transparently through the Radio Network Controller.

Whilst the system works effectively in present 2nd generation GSM telecommunication systems, pursuant to the invention, a modified method and system for handling data packets has been proposed.

### Summary of the Invention

According to a first aspect, there is provided a method of handling data packets received from a packet network comprising:
receiving protocol data packets from a network at a gateway;
passing the protocol data packets to a switching centre or service node connected to a radio network controller, characterised in that the method further comprises:
forwarding the protocol data packets from the switching centre to the radio network controller;
terminating the protocol data packets within the radio network controller and forwarding data, preferably comprising a compressed packet corresponding to the protocol data packet, preferably having a header portion of the protocol data packet compressed, from the radio network controller to the user equipment.

Placing the compression and termination mechanism in the radio network controller rather than the switching centre or serving node represents a departure from the 2nd generation architecture. Additionally, it would appear that this has a slight disadvantage in that increased bandwidth is required on the Iu (interface for UMTS) link between the radio network controller and the serving node or switching centre; both these factors would tend to point away from the invention.

However, pursuant to the invention, it has been found that the movement of the termination function may offer significant advantages. Firstly, processing within the serving node or switching centre may be made more efficient and may require less processing power as it is not necessary for each packet to be opened and processed. Furthermore, problems associated with handing over from one switching centre to another can be alleviated as the uncompressed packets are available. A yet further advantage is that, if the link between the radio network controller and the string centre is not reliable, this can be accommodated more readily. Furthermore, the compression used can be optimised according to the radio mode.

In a preferred embodiment, in a UMTS system, the switching centre comprises a 3G-SGSN (3rd Generation Serving GPRS [General Packet Radio System] Support Node).

In a second aspect, the invention provides a radio network controller (RNC) node of a radio access network RAN of a UMTS network comprising: means for receiving a protocol (for example IP) data packet; means for terminating the protocol data packet and means for forwarding data from the packet to a user node.

In a third aspect, the invention provides a mobile telecommunications system network having a radio network controller and a serving node arranged so that protocol data packets received at the serving node from a gateway pass through the serving node and are terminated at the radio network controller, the radio network controller having means for terminating the packets and forwarding data contained therein to user equipment.

In a fourth aspect the invention provides a method of communication in a mobile telecommunication system between a serving or switching node and user equipment, via a radio network controller, the method comprising communicating between the radio network controller and the serving node using protocol data packets substantially corresponding to protocol data packets communicated between the serving or switching node and an external protocol data network and communicating between the user node and the radio network controller using compressed data corresponding to the content of the protocol data packets, the method further comprising converting between the compressed data and the protocol data packets within the radio network controller.

### Brief Description of the Drawing

An embodiment of the invention will now be described by way of example, with reference of the accompanying drawings in which:
Fig. 1 shows schematically the architecture of a 3rd generation mobile communication system embodying the invention;
Fig. 2 schematically depicts 2nd generation SubNetwork Divergence Control Protocol (SNDCP);
Fig. 3 depicts implication of SNDCP to a 3rd generation UMTS network embodying the invention;
and Fig. 4 is a schematic diagram illustrating second generation GSM systems.

### Description of the Preferred Embodiment

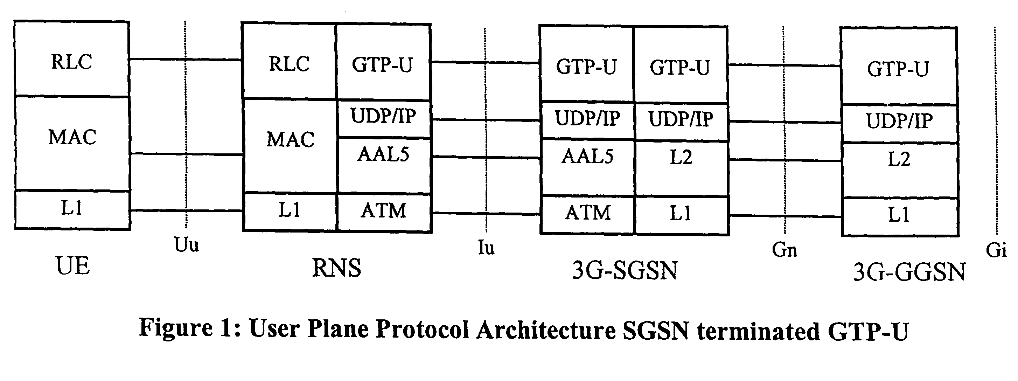

Referring to Fig. 1, an embodiment of suitable network architecture to perform the compression of IP protocol information to the UE is shown schematically.

A tunnelling protocol is used between the 3G-SGSN and the UTRAN.

By observing the stack we can see that the UTRAN terminates the tunnels, whereas in a 2G system the tunnels would be terminated and interpreted by the 2G-SGSN. A relay would be used to pass the tunnelled packets to the Subnetwork Divergence Control Protocol, SNDCP (For 3G purposes, Compression Entity Protocol [CEP]) layer for compression. Also note that there is no LLC layer in the CN, however, it is assumed that the RLC layer in the RNC will perform all the necessary actions that LLC performs in the 2G architecture.

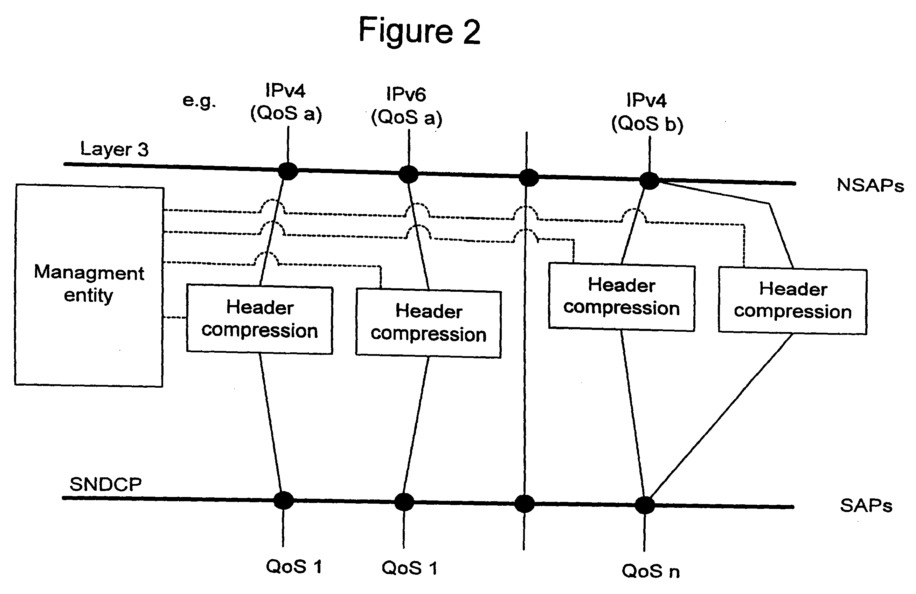

To assist in the understanding of the background, we will briefly describe the Current Compression Mechanism in a 2nd generation system, with reference to Fig. 2.

SNDCP (Subnetwork Divergence Control Protocol) is the protocol located above the LLC layer in the 2^{nd} generation GPRS user plane stack.

Users of the SNDCP in 2^{nd} generation systems are the relay (SGSN) and the Packet Data Protocol (UE) whilst SNDCP uses the services of the LLC and SM layer. SNDCP also provides the ability to multiplex PDP's onto a single SNDCP connection and offers segmentation and reassemble of N-PDU's to/from LLC PDU's.

SNDCP also offers the ability to compress/decompress both protocol control information (e.g. TCP/IP header) and user data.

Above and below the compression/decompression, the mapping of NSAPs (Upper SNDCP) to SAPs (Lower SNDCP) is performed by the SNDCP function, where one SAP is equal to one QoS profile having the same address. Figure 2 illustrates the position and function of SNDCP.

To implement IP compression in a third generation system, we have considered extension from known, tried and tested and globally used 2nd generation systems by implementing packet termination and compression in the 3G-SGSN. This potentially has several advantages; if the compression mechanism is placed in the serving node then it is possible to have compression on the Iu, which could possibly save some bandwidth on the Iu User Plane interface. Additionally, this would look more like the GPRS solution used today so implementation would potentially be more straightforward.

However, pursuant to the invention, analysis has suggested that such a solution may have certain disadvantages as will be discussed.

Firstly, this solution necessitates an increase in required processing power due to the fact that the SGSN must perform this compression/decompression function for each active PDP session that it participates in. Furthermore, data rates may be less efficient as a result of the 3G-SGSN having to open and process each packet.

During handovers between 3G-SGSN's it will be necessary for the compression entity to be reset. Moreover, pursuant to the invention, we have considered inter-working - for example - inter SGSN handover. During the packet session the GTP packets in the old SGSN will be in a compressed form. However, during handover some packets will need to forward to the new SGSN. We may assume that 3G compression algorithms could possibly be different to 2G compression algorithms, therefore complexity and delay is added to the architecture as packets would require decompressing before being transferred from the old SGSN to the new SGSN.
We have proposed that it would be preferable to have a solution that is generic to any kind of offered RAN, which this solution unfortunately does not offer. We also require the compression function to be adaptive to highly varying delays and re-ordering of packets. Thus if we assume an unreliable Iu, lost packets mean long recovery time as current compression algorithms assume that compressed headers are received correctly. This further implies that the number of packets to be transmitted increases after error, therefore degradation of the compression effect may occur.

Thus, we have identified certain potential disadvantages if a system based closely on the present system is implemented.

As an alternative, we have investigated the possibility of employing Compression in the 3G-GGSN. This promises several advantages, for example, if the compression mechanism is placed in the gateway then it is possible to have compression on the Iu, which could possibly save some bandwidth on the Iu User Plane interface. Additionally, during handovers, if we assume that the 3G-GGSN is the anchor point then reset of the CEP entity will never occur. Both of these factors suggest that this solution might be preferable to the above.

However, further analysis purusuant to the invention has revealed potential disadvantages. In particular, placing the compression within the 3G-GGSN is completely dissimilar to the method used today in GPRS and this solution would require updates to GGSN functionality and necessitate a significant increase in required processing power due to the fact that the GGSN must perform this compression/decompression function for each active PDP session that it participates in. We have considered further the incompatibilities between 2G and 3G - for example - it would be impossible to have a 2G-SGSN inter-working with a 3G-GGSN. Thus this solution would be quite complex to implement in an inter-working environment.

We have further considered the requirements placed on the compression function by the new access network and noted above that it would be preferable to have a solution that is generic to any kind of offered RAN, which this solution does not offer. We also require the compression function to be adaptive to highly varying delays and re-ordering of packets. Thus if we assume an unreliable Iu, lost packets mean long recovery time as current compression algorithms assume that compressed headers are received correctly. This further implies that the number of packets to be transmitted increases after error, therefore degradation

The above considerations point back towards the first proposed solution.

We have, however, considered a yet further possibility, namely introducing L3 Compression entity in the RNC; this is applied in the embodiment of the invention.

At first sight, by locating the compression in the RAN then we lose the ability for compression on the Iu interface. This suggests that this solution would be inferior to the solution first proposed.

However, we have found that this loss of the possibility of compression on the Iu is outweighed by certain other potential benefits, which were not present in second generation systems.

A first advantage we have appreciated is that this solution for UMTS allows the processing load of compression/decompression mechanisms to be fully distributed which also implies that the additional advantage that the compression can be optimised for the used RAN.

A second advantage is that locating the compression function in the RAN defers the SGSN from the task of opening and processing packets, therefore increasing the possible data rates that can be achieved.

Further, we may note that the compression entity is as close as possible to the reliable link which in this case is the RLC. Therefore it can be stated that a faster recovery of packets is possible after loss of packets in the radio interface and this solution will therefore minimise the amount of buffering in the UE and network.

As a final observation we can state that efficient inter-system handovers can be supported using this solution.

If we consider inter-working, this is fully achievable with minimum complexity even though this is slightly different to the GPRS solution, however, one slight drawback is that the compression entity will be reset after each Inter-RNC Handover. This can, however, be tolerated.

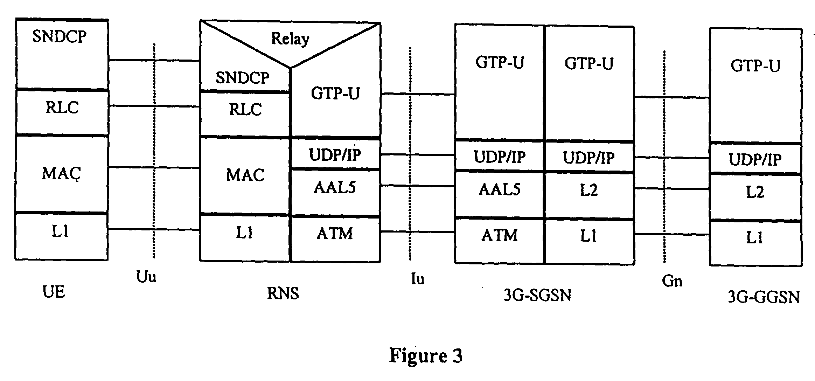

Thus, referring back to Fig. 1, the third mentioned solution can be readily implemented in present UMTS architecture. Fig. 3 depicts schematically application of compression, more particularly User Plane Protocol Architecture with compression mechanisms. It is noted that the CEP layer is an evolved form of the 2G SNDCP layer handling RLC primitives.

In this specification, the term protocol data packets is intended to encompass any data packets substantially conforming to a defined protocol, of which IP is but one example; the invention can be extended to other packet formats. The embodiment is described in the context of UMTS and reference is made to terms used to, or similar to those used to, refer to specific components of a UMTS system. The invention may be applied to other systems which do not conform to the UMTS specification and unless the context dictates otherwise, use of any such terms is intended to encompass components of other systems which perform broadly equivalent functions.

Each feature mentioned may be incorporated independently as may the alternative but less preferred solutions to the problem of implementing protocol data packet handling in a third generation (or related) mobile telecommunications system.

## Claims

1. A method of handling data packets received from a packet network comprising:
receiving protocol data packets from a network at a gateway;
passing the protocol data packets to a switching centre or service node connected to a radio network controller, characterised in that the method further comprises:
forwarding the protocol data packets from the switching centre to the radio network controller;
terminating the protocol data packets within the radio network controller and forwarding data corresponding to the protocol data packet from the radio network controller to the user equipment.

2. A method according to Claim 1 including compressing the header of the protocol data packets in the radio network controller.

3. A method according to Claim 1 or Claim 2 for use in a UMTS system wherein said switching centre comprises a 3G-SGSN.

4. A radio network controller (RNC) node of a radio access network RAN of a UMTS network comprising: means for receiving a protocol data packet; means for terminating the protocol data packet and means for forwarding data from the packet to a user node.

5. A controller according to Claim 4, wherein the terminating means comprises means for compressing the packet header.

6. A controller according to Claim 4 or Claim 5, wherein the terminating means comprises means for acknowledging packet receipt.

7. A controller according to Claim 4, 5 or 6, including means for retransmitting information to a user in the event of communication failure between the controller and the user.

8. A mobile telecommunications system network having a radio network controller in communication with user equipment and a serving node connected to a gateway, the radio network controller and serving node being arranged so that protocol data packets received at the serving node from the gateway pass through the serving node and are terminated at the radio network controller, the radio network controller having means for terminating the packets and forwarding data contained therein to user equipment.

9. A method of communication in a mobile telecommunication system between a serving or switching node and user equipment, via a radio network controller, the method comprising communicating between the radio network controller and the serving node using protocol data packets substantially corresponding to protocol data packets communicated between the serving or switching node and an external protocol data network and communicating between the user node and the radio network controller using compressed data corresponding to the content of the protocol data packets, the method further comprising converting between the compressed data and the protocol data packets within the radio network controller.

10. A method or system according to any preceding claim wherein the data packets are IP packets.
